Europäisches Patentamt

European Patent Office

Office européen des brevets

(11) Numéro de publication: **0 081 873**
**B1**

## (12) FASCICULE DE BREVET EUROPEEN

(45) Date de publication du fascicule du brevet: **03.06.87**

(51) Int. Cl.⁴: **G 06 F 15/06**, G 11 C 17/00

(21) Numéro de dépôt: **82201515.2**

(22) Date de dépôt: **30.11.82**

(54) **Système de traitement de données permettant d'utiliser la même mémoire effaçable et programmable, pour les instructions et les données tant en lecture qu'en écriture.**

(30) Priorité: **02.12.81 FR 8122570**

(43) Date de publication de la demande:
**22.06.83 Bulletin 83/25**

(45) Mention de la délivrance du brevet:
**03.06.87 Bulletin 87/23**

(84) Etats contractants désignés:
**DE FR GB IT SE**

(56) Documents cités:
**FR-A-2 401 459**

**COMPUTER DESIGN, vol. 20, no. 1, janvier 1981, pages 182,184, Winchester, USA, "Byte erasable 16k-Bit EEPROM offers 250-ns access time"**

**ELECTRONIC DESIGN, vol. 29, no. 20, septembre 1981, pages 171-177, Waseca, USA, "X-cell architecture packs 128 kbits onto EPROM chip"**

(73) Titulaire: **S.A. PHILIPS INDUSTRIELLE ET COMMERCIALE**
**50 Avenue Montaigne**
**F-75008 Paris (FR)**
(84) **FR**

(73) Titulaire: **N.V. Philips' Gloeilampenfabrieken**
**Groenewoudseweg 1**
**NL-5621 BA Eindhoven (NL)**
(84) **DE GB IT SE**

(72) Inventeur: **Robert, Serge**
**Société Civile S.P.I.D. 209, rue de l'Université**
**F-75007 Paris (FR)**
Inventeur: **Fevrier, Pierre**
**Société Civile S.P.I.D. 209, rue de l'Université**
**F-75007 Paris (FR)**

(74) Mandataire: **Pinchon, Pierre et al**
**Société Civile S.P.I.D. 209 rue de l'Université**
**F-75007 Paris (FR)**

Courier Press, Leamington Spa, England.

(58) Documents cités:

**ELECTRONIC DESIGN, vol. 28, no. 24, novembre 1980, pages 247-250, Waseca, USA, G. DESROCHERS: "EE PROM eclipses other reprogrammable memories"**

**COMPUTER, vol. 12, no. 2, février 1979, pages 22-31, New York, USA, J.F. WAKERLY: "The intel MCS-48 microcomputer family: A critique"**

**ELECTRONIQUE INDUSTRIELLE, no. 12, 15 mars 1981, pages 77-80, Paris, FR., G. JUTON: "Le micro-ordinateur TMS 9995"**

**WIRELESS WORLD, vol. 88, no. 1557, juin 1982, page 61, Sheepen Place, Olchester, G.B., Y.C. CHEAH: "Minimum component-count microprocessor"**

**Description**

La présente invention concerne un système de traitement de données, comportant une mémoire externe et un microprocesseur à mémoire interne, le microprocesseur et la mémoire externe étant connectés à un bus, ledit microprocesseur comportant une broche de commande de programme et au moins une broche de commande de port, ladite mémoire externe comportant une broche de sélection de mémoire.

De tels systèmes de traitement de données sont généralement utilisés dans un (muni-) ordinateur. La mémoire externe comporte habituellement une mémoire morte (ROM) et une mémoire vive (RAM). La mémoire morte est utilisée pour emmagasiner les instructions et les données nécessaire pour l'exécution d'un programme par le microprocesseur. La mémoire vive est entre autre utilisée pour traiter en lecture et en écriture des données pendant l'exécution du programme.

Les mini-ordinateurs sont appelées à un grand développement car leur possibilité d'automatisation de toutes sortes de processus s'augmente quotidiennement non seulement dans des applications de haute technicité mais aussi dans des applications domestiques, machines à laver, allumage et injection électronique des voitures, ainsi que dans des systèmes de transfert électronique de fonds (terminaux pour carte bancaire électronique, dite carte à mémoire).

Dans la plupart des cas d'application, une certaine vitesse est recherchée c'est pourquoi des boîtiers de mémoire morte externe et de mémoire vive externe sont utilisées dans les appareils définitifs.

Lors de la mise au point du miniordinateur, le boîtier de mémoire morte externe (ROM) qui contient le programme à exécuter est souvent remplacé par un boîtier de mémoire effaçable et programmable (EPROM, EEPROM), ce qui permet de changer le programme qu'il contient au fur et à mesure de la mise au point et ceci sans que le dit boîtier de mémoire effaçable et programmable (dite reprogrammable) devienne inutilisable.

Les divers avantages que procure une mémoire EEPROM ainsi que certaines caractéristiques de la mémoire 2816 de Intel sont décrits dans 'Computer Design' Vol 20—No. 1—1981 January p. 182 et 184. Le microprocesseur 8086 à mémoire interne, respectivement la memoire externe 2816 reprogrammable, sont connectes au bus d'adresses et au bus de données. Ladite memoire externe est commandée par des signaux de connexion de mémoire et de sélection de mémoire.

De ce fait la mémoire morte reprogrammable devient en fait une mémoire vive puisque l'on peut effacer et réécrire son contenu; toutefois le prix des mémoires mortes reprogrammables est supérieur au prix des mémoires vives (RAM), elles-mêmes plus chères que les mémoires mortes (ROM, PROM).

Dans l'état actuel de la technique les mémoires effaçable et programmables mais non volatiles assument les mêmes fonctions de lecture écriture qu'une mémoire vive; leurs différences essentielles sont: la vitesse, le prix et la volatilité. Une mémoire reprogrammable est plus chère qu'une mémoire vive et elle est à peu près $10^5$ fois plus lente pour une écriture (10 milli-secondes contre 100 nano-secondes); la mémoire reprogrammable est permanente alors que la mémoire vive est volatile.

La différence de vitesse peut ne pas être gênante fonctionnellement pour certaines applications qui ne nécessitent pas une grande rapidité; par contre, lors d'une écriture dans la mémoire reprogrammable, le microprocesseur doit attendre la fin de l'opération d'écriture avant de continuer l'exécution du programme, cette attente (10 msec) est réalisée au moyen d'instructions qui doivent être chargées dans la mémoire interne du microprocesseur. De ce fait la broche de commande d'écriture du microprocesseur ne peut pas être utilisée car la durée du signal fourni (100 nano-secondes) est trop brève et ne peut être commandée pour une durée plus longue; il faut donc utiliser une des broches de commande de port mais alors une première difficulté apparaît; en effet la broche commandée de sélection mémoire de la mémoire reprogrammable va devoir être connectée à deux broches du microprocesseur à savoir la broche de commande de programme et une des broches de commande de port; or il ne faut pas que ce deux broches de commandes se perturbent mutuellement.

En effet, d'une part la broche de commande de programme est aussi connectée à la broche commandée de sélection mémoire, d'autre part les broches de commande de port sont souvent multiplexées ce qui signifie qu'ayant plusieurs utilisations elles sont aussi connectées à d'autres boîtiers pour commander d'autres fonctions; ces autres fonctions ne doivent évidemment pas s'exécuter simultanément à la fonction d'écriture dans la mémoire reprogrammable.

Le but de l'invention est de réaliser un système de traitement de données comportant non plus deux mémoires physiques externes l'une vive et l'autre morte, aussurant respectivement les fonctions logiques données, et programme, mais une seule mémoire physique reprogrammable supportant les deux fonctions logiques, sans que les signaux de commandes émis par le microprocesseur se perturbent mutuellement.

Selon l'invention telle qu'elle est definie dans la revendication 1 un système de traitement de données est particulièrement remarquable en ce que, ladite mémoire externe est une mémoire reprogrammable (5) dont broche de sélection de mémoire (C̄Ē) est reliée à une première sortie (S1) d'un système logique de connexion (6), lequel système logique de connexion une première entrée (E1) connecté à la broche de commande de programme P̄S̄Ē̄N̄) d'un microprocesseur et une deuxième entrée (E2) connectée à l'une des broches de commande de port (Pxx) dudit microprocesseur, lequel systéme logique de connexion est disposé d'une part pour transmettre à la première sortie (S1) un signal présent à sa première entrée

# 0 081 873

(E1=$\overline{\text{PSEN}}$) lors d'une opération de lecture de la mémoire externe commandée par ledit microprocesseur et d'autre par pour transmettre à la première sortie (S1) signal présent à sa deuxième entrée (E2=Pxx) lors d'une opération d'écriture dans ladite mémoire externe et arrêter une propagation vers la première entrée (E1) dudit signal présent à sa deuxième entrée (E2).

L'invention réalise son but en ce que la mémoire externe est effaçable et programmable (EPROM, EEPROM), et en ce que, grâce à l'emploi du système logique de connexion, le signal de commande émis à l'une des broches de commande de port du microprocesseur ne perturbera pas la broche de commande de programme.

Une première réalisation préférentielle d'un système de traitement de données selon l'invention est particulièrement remarquable, en ce que ladite mémoire externe (5) est une mémoire électriquement effaçable et programmable.

Pour reprogrammer une mémoire électriquement effaçable et programmable (dite EEPROM) il suffit d'une source de tension débitant à peu près 20 V. De telles sources de tension sont facilement incorporables dans le système. De plus une mémoire de type EEPROM donne toute la souplesse désirée puisqu'elle n'est pas volatile comme le serait une RAM, et puisque le microprocesseur peut effacer électriquement le contenu d'une adresse déjà utilisée précédemment avant de réécrire à cette même adresse.

Une seconde réalisation préférentielle d'un système de traitement de données selon l'invention, dans lequel la mémoire externe comporte une broche de commande de sortie $\overline{\text{(OE)}}$ est particulièrement remarquable en ce que ledit système logique de connexion (6) comporte une deuxième sortie (S2), laquelle deuxième sortie est reliée à ladite première entrée (E1) pour transmettre directement le signal présent à cette première entrée, ladite broche de commande de sortie de la mémoire externe étant connectée à ladite deuxième sortie.

L'on réalise ainsi un système logique de connexion particulièrement simple et efficace qui est applicable à une mémoire externe qui comporte un broche de commande de sortie.

Une troisième réalisation préférentielle d'un système de traitement de données selon l'invention dans lequel l'une des broches de commande de port du microprocesseur est utilisable en mode multiplexe (MP) dans le temps à sa sortie est particulièrement remarquable en ce que ledit système logique de connexion est aussi disposé pour empêcher un signal présent sur sa première entrée (E1) de perturber ladite deuxième entrée (E2). Dans le cas où l'une des broches de commande de port (Pxx) du microprocesseur est multiplexée dans le temps à sa sortie, c'est à dire utilisée pour commander à d'autres moments d'autres éléments périphériques du microprocesseur il est important que les signaux n'ayant pas de rapport avec l'opération d'écriture dans la mémoire externe ne soient pas perturbés par le signal présent à ladite première entrée.

Dans une autre réalisation préférentielle un système de traitement de données selon l'invention est particulièrement remarquable en ce que ledit système de portes logiques est constitué d'une porte logique ET (7). Des portes logiques ET étant disponibles à bon marché dans le commerce cette réalisation est dès lors très avantageuse.

Une autre réalisation préférentielle d'un système de traitement de données selon l'invention est particulièrement remarquable en ce que ledit système de portes logiques comporte au moins deux diodes (D1, D2) disposées en ET cablé. Cette réalisation est techniquement facile à réaliser.

L'invention s'applique de préférence à un système de transfert électronique de fonds puisqu'elle permet de réaliser à bon marché des terminaux pour carte bancaire. Dans cette application la vitesse avec laquelle les données sont traités n'est pas primordiale.

Il est connu que pour commander la validation d'une mémoire externe il y a deux techniques:

1. La technique "TEXAS (INSTRUMENTS)" qui ne comporte qu'une broche de commande de sélection de mémoire (CS chip select).

2. La technique "INTEL-ZILOG" qui comporte une broche de commande de sélection mémoire (CE chip enable) et une broche de commande de sortie (OE output enable).

Le système de traitement de données selon l'invention s'applique aux deux techniques.

La description du mode de fonctionnement qui suit concerne la technique "Intel-Zilog", mais ceci n'est pas une limitation étant entendu qu'il suffit de supprimer l'emploi, et par conséquent la connexion, de la commande de sortie (OE), pour appliquer l'invention à la technique Texas Instruments. La description du mode de fonctionnement du système sera donnée sous la forme d'une réalisation préférentielle avec une mémoire externe du type EEPROM et en supposant qu'il n'y a qu'une seule chip physique pour la mémoire externe et donc pas de décodeur d'adresses qu'il suffirait toutefois d'insérer le cas échéant entre ladite première sortie et la broche de sélection de mémoire.

On pourrait aussi mettre en oeuvre l'invention avec une mémoire effacable par rayons ultraviolet dite EPROM mais le fonctionnement serait très dégradé puisque l'on ne pourrait écrire qu'une seule fois à une adresse déterminée; en effet, l'effacement par rayonnement ultra-violet, que l'on pourrait commander par le microprocesseur est un effacement global de toute la mémoire, ce que annéantirait le programme en cours d'exécution si l'on suppose qu'il n'y a qu'une seule puce mémoire.

La description qui suit fera bien comprendre avec deux exemples non limitatifs un mode de réalisation de l'invention.

4

La figure 1 représente, pour mémoire, l'architecture des éléments principaux d'un système classique de traitement de données.

La figure 2 représente une réalisation élémentaire d'un système de traitement de données conforme à l'invention.

Les figures 2a, 2b représentent des variantes du système de connexion.

La figure 3 représente une forme préférentielle d'une réalisation d'un système de traitement de données conforme à l'invention.

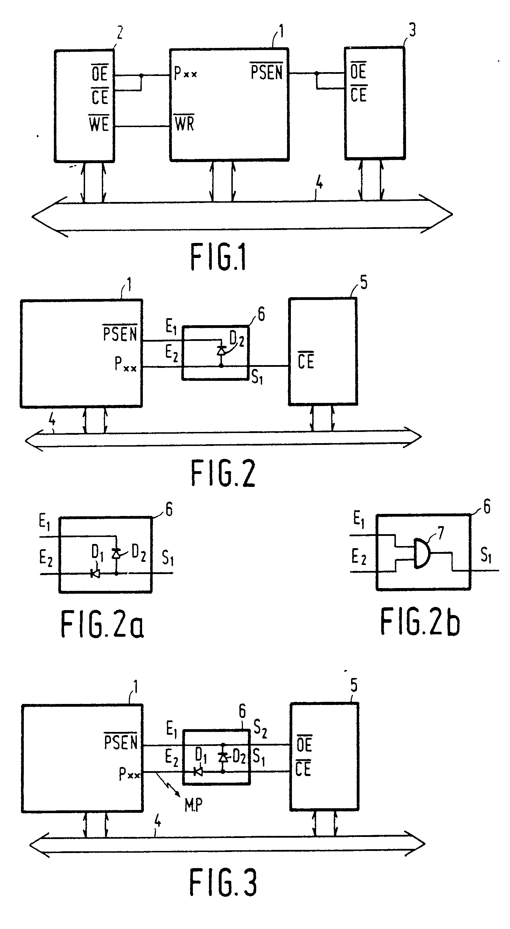

Sur la figure 1, l'homme de l'art reconnaître facilement l'architecture classique d'un système de traitement de données, appelé aussi mini-ordinateur, qui comporte:

— un BUS (4)
— un microprocesseur (1) par exemple un 8084 de chez INTEL.
— une mémoire vive (RAM) (2) par exemple une 2141 de chez INTEL.
— une mémoire morte (ROM) (3) par exemple une 3236 de chez INTEL.

La broche de commande de programme (PSEN) et une broche de commande de port (Pxx) du microprocesseur (par exemple la porte P23) sont respectivement connectées directement aux broches commandées de connexion mémoire (OE) et de sélection (CE) de chaque mémoire morte (ROM) et vive (RAM).

La broche de commande d'écriture (WR) du microprocesseur est connectée à la broche commandée d'écriture (WE) de la mémoire vive (RAM).

Sur les figures 2 et 3 il n'y a plus que deux puces physiques:

— un microprocesseur (1) par exemple un 8084 de chez INTEL.
— une mémoire effaçable et programmable, de préférence électriquement effaçable et programmable par exemple une EEPROM 2816 de chez INTEL comme représentée dans la figure 3.

La broche de commande (WR) du microprocesseur n'est plus utilisée car son signal de commande à une durée trop courte pour une mémoire EEPROM dans l'etat actuel de la techniques.

Dans la réalisation selon la figure 2 la broche de commande de programme (PSEN) du microprocesseur est directement connectée à une première entrée $E_1$ d'un système logique de connection 6. Une seconde entrée $E_2$ du système logique de connexion 6 est connectée à une broche de commande de port Pxx, par exemple la porte P23 du microprocesseur. Une première sortie $S_1$ du système logique de connexion est connectée à la broche commandée de sélection de mémoire CE de la mémoire effaçable et programmable 5.

Le système logique de connexion 6 comporte une diode (D2) qui empêche un signal présent sur la commande de port Pxx de perturber la commande de programme PSEN au niveau du microprocesseur. Sur la figure 2a le système logique de connexion comporte une deuxième diode ($D_1$) qui empêche un signal présent sur la première entrée $E_1$ de perturber la deuxième entrée $E_2$. La première diode et la deuxième diode sont disposées en ET cablé. Ces diodes sont par exemple des BAX 12 de chez Radiotechnique-Compelec.

Dans la figure 2b les deux diodes de la figure 2a sont remplacées par une porte logique ET qui assure la même fonction; par exemple une porte logique 7408 de chez Texas Instruments. La sortie de la porte logique ET est connectée à ladite première sortie du système logique ·de connexion.

Dans la forme préférentielle, montrée dans la figure 3, la variante de la figure 2a a été retenue. La connexion de multiplexage vers d'autres périphériques de la broche de commande Pxx est représenté symboliquement par la flèche MP. La mémoire externe (5) est une mémoire électriquement effaçable et programmable dite EEPROM qui possède une broche de commande de sortie (OE) reliée à une deuxième sortie $S_2$ du système logique de connexion 6, elle-même reliée directement à la première entrée du système logique de connexion.

On remarquera la simplicité du dispositif conforme à l'invention eu égard aux économies ainsi réalisées dans le miniordinateur fut-ce au prix d'une relative lenteur lors de l'écriture dans la mémoire.

Le mode de fonctionnement du schéma de la figure 1 est conforme aux deux tables de vérités suivantes:

a) pour la mémoire ROM externe (3):

TABLE I

| F \ BR | $\overline{PSEN}$ | $\overline{OE}$ | $\overline{CE}$ |
|---|---|---|---|
| A | L | L | L |
| B | L | L | L |
| $\overline{A}.\overline{B}$ | H | H | H |

Sur cette table I sont représentées, d'une part les broches (BR) de commande du microprocesseur (PSEN) et les broches commandées de la mémoire (OE) et (CE), d'autre part les fonctions (F) commandées:

— soit la lecture (A) d'une instruction à exécuter (cycle Fetch)

— soit la lecture (B) d'une donnée nécessaire à l'exécution d'une instruction; les indications niveau bas (L) et niveau haut (H) indiquent l'état de la tension électrique des broches. (A.B) indique que ni la fonction A, ni la fonction B ne sont actives, c'est à dire qu'il n'y a pas d'opération de lecture requise par le microprocesseur (PSEN) niveau haut (H) pour la mémoire morte. A la lecture de la table I l'on s'aperçoit que lorsque le microprocesseur fait appel ((PSEN) niveau bas (L)) à soit une instruction, soit une donnée emmagasinée dans la mémoire morte (3) les broches commandées de la mémoire morte (3) (OE) et (CE) sont maintenues à leur niveau actif (=niveau bas) permettant ainsi à cette mémoire morte de transmettre les informations requises par l'intermédiaire du bus (4).

b) pour la mémoire RAM externe (2):

TABLE II

| BR / F | Pxx | $\overline{WR}$ | $\overline{WE}$ | $\overline{OE}$ | $\overline{CE}$ |
|---|---|---|---|---|---|
| B | L | H | H | L | L |
| C | L | L | L | L | L |
| $\overline{B.C}$ | H | X | X | H | H |

Sur cette table II sont représentées d'une part les broches (BR) de commande du microprocesseur (Pxx et $\overline{WR}$) et les broches commandées de la mémoire (2), ($\overline{WE}$, $\overline{OE}$, $\overline{CE}$), d'autre part les fonctions (F) commandées soit la lecture (B) soit l'écriture (C) d'une donnée dans la mémoire vive.

Les indications niveau bas (L) et niveau haut (H) indiquent l'étant de la tension électrique qui active la fonction désirée; l'indication (X) signifie que la valeur de la tension est indifférente.

L'écriture $\overline{B.C}$ indique que ni la fonction B ni la fonction C ne sont actives, c'est à dire qu'il n'y a pas d'appel de la part du microprocesseur à l'adresse de la mémoire (2), ce qui explique aussi que la valeur de la tension aux broches $\overline{WR}$ et $\overline{WE}$ peut être indifférente lors de la fonction $\overline{B.C}$.

c) Le mode de fonctionnement du schéma des figures 2 et 3, conforme à l'invention, s'effectue selon la table de vérité suivant (TABLE III):

TABLE III

| BR / F | $\overline{PSEN}$ | Pxx | $\overline{OE}$ (fig. 3) | $\overline{CE}$ | $\overline{PSEN} \cap Pxx$ |
|---|---|---|---|---|---|
| A | L | X | L | L | L |
| B | L | X | L | L | L |
| C | H | L | H | L | L |
| $\overline{A.B.C.}$ | H | H | H | H | H |

Les broches et les fonctions sont les mêmes que pour les tables I et II.

Compte-tenu de ce que la broche $\overline{PSEN}$ du microprocesseur est directement connectée à la broche $\overline{OE}$ (Fig. 3) de la mémoire EEPROM le signal de ces deux broches est identique, c'est à dire un niveau bas lors d'une opération de lecture (A, B) et un niveau haut lors d'une opération d'écriture (C) ou en absence d'opération. Le signal sur la broche $\overline{CE}$ de la mémoire reprogrammable est obtenu en appliquant la fonction logique ET sur les signaux $\overline{PSEN}$ et Pxx en provenance du microprocesseur comme indiqué dans la table III. Le signal présent sur la broche $\overline{CE}$ de la mémoire reprogrammable a un niveau bas (niveau actif) pour chaque opération aussi bien de lecture que d'écriture dans la mémoire 5. L'indifférence de la broche Pxx à la valeur de la tension lors d'une opération de lecture (A ou B) s'explique par le fait que le signal $\overline{PSEN}$ a toujours un niveau bas lors de cette opération de lecture.

Le dispositif n'étant pas spécifique à une ou plusieurs adresses, ou encore à une tranche de mémoire, toute la mémoire EEPROM est ainsi banalisée et disponible indifféremment en lecture et en écriture aussi bien pour les instructions que pour les données; en plus des avantages déjà explicités, il est possible de modifier, par une simple opération d'écriture (C), les instructions d'un programme au fur et à mesure de

**0 081 873**

l'exécution; le programme devient auto-évolutif et cette possibilité accroît considérablement les utilisations possibles du mini-ordinateur.

Les systèmes de transfert électronique de fonds comportent en général un terminal dans lequel un client introduit sa carte bancaire. Ce terminal comporte un mini-ordinateur. Dans l'utilisation de ces terminaux pour carte bancaire la vitesse à laquelle les données sont traitées n'est pas primordiale. En effet, le client ne remarquera nullement une différence entre 10 MSEC et 100 nano-secondes nécessaire pour l'écriture dans la mémoire externe. Ceci est d'autant plus justifié si l'on compare le temps nécessaire au client pour introduire au moyen d'un clavier la somme d'argent désirée. Dès lors, un système de traitement de données selon l'invention trouve une parfaite application dans un système de transfert électronique de fonds qui peut ainsi être réalisé à bon marché.

**Revendications**

1. Système de traitement de pour recevoir données, comportant une mémoire externe reprogrammable à la fois des instructions et des donnés et un microprocesseur à mémoire interne, le microprocesseur et la mémoire externe étant connectés à un bus, ledit microprocesseur comportant une broche de commande de programme et au moins une broche de commande de port, ladite mémoire externe comportant une broche de sélection de mémoire reliée à une première d'un système logique de connexion, lequel système logique de connexion ayant une première entrée connectée à ladite broche de commande de programme et une deuxième entrée connectée à l'une des dites broches de commande de port, lequel système logique de connexion étant disposé d'une part pour transmettre à sa première sortie un signal présent à sa première entrée lors d'une opération de lecture de la mémoire externe commandée par le microprocesseur et d'autre part pour transmettre à sa première sortie le signal présent à sa deuxième entrée lors d'une opération d'écriture commandée par le microprocesseur pour ladite mémoire et arrêter une propagation vers la première entrée dudit signal présent à sa deuxième entrée.

2. Système de traitement de données selon la première revendication, caractérisé en ce que ladite mémoire externe est une mémoire électriquement effaçable et programmable.

3. Système de traitement de données selon la revendication 1 ou 2, dont la mémoire externe comporte une broche de commande de sortie, caractérisé en ce que ledit système logique de connexion comporte une deuxième sortie, laquelle deuxième sortie est reliée à ladite première entrée pour transmettre directement le signal présent à cette première entrée, ladite broche de commande de sortie de la mémoire externe étant connectée à ladite deuxième sortie.

4. Système de traitement de données selon la revendication 1, 2 ou 3 dont l'une desdites broches de commande de port est utilisable en mode multiplexé dans le temps à la sortie dudit microprocesseur caractérisé en ce que ledit système logique de connexion est aussi disposé pour empêcher un signal présent sur sa première entrée de perturber ladite deuxième entrée.

5. Système de traitement de données selon l'une quelconque des précédentes revendications, caractérisée en ce que ledit système logique de connexion est constitué d'une porte logique ET.

6. Système de traitement de données selon la revendication 4, caractérisé en ce que ledit système logique de connexion comporte au moins deux diodes disposées en ET câblé.

7. Système de transfert électrique de fonds équipé d'un système de triatement de données selon l'une quelconque des revendications précédentes.

**Patentansprüche**

1. Datenverarbeitungssystem mit einem externen, neu programmierbaren Speicher, der sowohl zum Empfang von Instruktionen als auch von Daten dient, und mit einem Mikroprozessor mit innerem Speicher, wobei der Mikroprozessor und der externe Speicher an einen Bus angeschlossen sind, der Mikroprozessor einen Programmsteueranschluss und mindestens einen Gattersteueranschluss enthält, der externe Speicher einen Speicherauswahlanschluss verbunden mit einem ersten Ausgang eines logischen Verbindungssystems enthält, das einen ersten, mit dem Programmsteueranschluss verbundenen Eingang und einen zweiten, mit einem der Gattersteueranschlüsse verbundenen Eingang enthält und einerseits zum Übertragen eines an seinem ersten Eingang während eines Lesevorgangs des vom Mikroprozessor gesteuerten externen Speichers auf seinen ersten Ausgang vorhandenen Signals und andererseits zum Übertragen an seinem ersten Ausgang des an seinem zweiten Eingang während eines vom Mikroprozessor gesteuerten Schreibvorgangs für diesen Speicher vorhandenen Signals sowie zur Verhinderung einer Fortpflanzung des an seinem zweiten Eingang vorhandenen Signals zum ersten Eingang dient.

2. Datenverarbeitungssystems nach Anspruch 1, dadurch gekennzeichnet, dass der externe Speicher ein elektrisch löschbarer und programmierbarer Speicher ist.

3. Datenverarbeitungssystem nach Anspruch 1 oder 2, dessen externer Speicher einen Ausgangssteueranschluss enthält, dadurch gekennzeichnet, dass das logische Verbindungssystem einen zweiten Ausgang aufweist, der mit dem ersten Eingang zum direkten Übertragen des an diesem ersten Eingang vorhandenen Signals verbunden ist, wobei der Ausgangssteueranschuss des externen Speichers mit dem zweiten Ausgang verbunden ist.

4. Datenverarbeitungssystem nach Anspruch 1, 2 oder 3, bei dem einer der genannten Gattersteuer-

7

**0 081 873**

anschlüsse in Zeitmultiplexbetrieb am Ausgang des genannten Mikroprozessors verwendet wird, dadurch gekennzeichnet, dass das logische Verbindungssystem ebenfalls dazu vorgesehen ist, zu verhindern, dass ein Signal an seinem ersten Eingang den zweiten Eingang stört.

5. Datenverarbeitungssystem nach einem oder mehreren der vorangehenden Ansprüche, dadurch gekennzeichnet, dass das logische Verbindungssystem aus einem logischen UND-Gatter besteht.

6. Datenverarbeitungssystem nach Anspruch 4, dadurch gekennzeichnet, dass das logische Verbindungssystem zumindest zwei Dioden enthält, die entsprechend eines verdrahteten UND-Gatters angeordnet sind.

7. Elektronisches Geldüberweisungssystem mit einem Datenverarbeitungssystem nach einem oder mehreren der vorangehenden Ansprüche.

## Claims

1. A data processing system comprising an external reprogrammable memory for receiving instructions as well as data and a microprocessor with an internal memory, the microprocessor and the external memory being connected to a bus, said microprocessor comprising a program control pin and at least one port control pin, said external memory comprising a memory selection pin which is connected to a first output of a logic connection system which has a first input connected to said program control pin and a second input connected to one of said port control pins, which logic connection system is arranged on the one hand for transmitting to its first output a signal present at its first input during a read operation in the external memory under the control of the microprocessor and on the other hand for transmitting to its first output the signal present at its second input during a write operation in said external memory under the control of the microprocessor and stopping a propagation of said signal present at its second input to its first input.

2. A data processing system as claimed in the first Claim, characterized in that said external memory is an electrically erasable and programmable memory.

3. A data processing system as claimed in Claim 1 or 2, the external memory of which comprises an output control pin, characterized in that said logic connection system comprises a second output which is connected to said first input for directly transmitting the signal present at said first input, said output control pin of the external memory being connected to said second output.

4. A data processing system as claimed in Claim 1, 2 or 3 in which one of said port control pins is usable in time multiplex mode at the output of said microprocessor, characterized in that said logic connection system is also arranged to prevent a signal present at its first input from disturbing said second input.

5. A data processing system as claimed in any one of the preceding Claims, characterized in that said logic connection system is formed by a logic AND-gate.

6. A data processing system as claimed in Claim 4, characterized in that said logic connection system comprises at least two diodes in a wired-AND connection.

7. An electronic funds transfer system provided with a data procesing system as claimed in any one of the preceding Claims.

FIG.1

FIG.2

FIG.2a

FIG.2b

FIG.3

1